# EUROPÄISCHE PATENTANMELDUNG

(11) **EP 4 715 602 A1**
(43) Veröffentlichungstag der Anmeldung: **25.03.2026**
(21) Anmeldenummer: 25198544.6
(22) Anmeldetag: 27.08.2025
(51) Int. Cl.: G06F 11/3668, G06F 11/3698, G06F 11/3604

(54) **VERFAHREN UND PROGRAMMPRODUKT ZUR PRÜFUNG EINES COMPUTERPROGRAMMS**

(30) Priorität: 19.09.2024 DE 102024126978
(71) Anmelder: CISPA - Helmholtz-Zentrum für Informationssicherheit gGmbH, 66123 Saarbrücken (DE)
(72) Erfinder: Iglev, Stanimir, 66125 Saarbrücken (DE); Steinhöfel, Dominic, 64367 Mühltal (DE); Zeller, Andreas, 66111 Saarbrücken (DE)
(74) Vertreter: Patentanwälte Olbricht Buchhold Keulertz

(57) **Zusammenfassung**

Die vorgestellte Erfindung betrifft ein Computerimplementiertes Verfahren (100) zur Prüfung eines Computerprogramms,
wobei das Verfahren (100) umfasst:
- Erzeugen (101) einer Grammatik (205) auf Grundlage von vorgegebenen syntaktischen und semantischen Formatbeschreibungen,
- Erzeugen (103) von Bedingungen (207), die potentiell teilsprachenübergreifende semantische Eigenschaften abbilden,
- Erzeugen (105) von Dokumenten (211) unter Verwendung der Grammatik (205) und Lösen der Bedingungen (207),
- Prüfung (107) eines Computerprogramms mittels der erzeugten Dokumente (211),
- Ausgeben (109) einer Meldung, die ein Ergebnis der Prüfung umfasst.

## Beschreibung

Die vorgestellte Erfindung umfasst ein computerimplementiertes Verfahren zur Prüfung eines Computerprogramms, ein Programmprodukt und eine Recheneinheit gemäß den beigefügten Ansprüchen.

Zum Austausch von Daten zwischen Computerprogrammen werden in der Regel standardisierte, strukturierte Datenformate verwendet. Das strukturierte Datenformat XML wird sowohl in der öffentlichen Verwaltung als auch in Unternehmen zum elektronischen Austausch von Daten verwendet. Firmen nutzen XML für den Austausch von Bestellungen, elektronische Rechnungen und ähnlichem.

Im praktischen Einsatz werden Schemas häufig zur Validierung von Eingaben verwendet, was die Robustheit der betreffenden Systeme gegen zufällige Testdaten erhöht. Neben XML-Schemas existieren bspw. Schemasprachen für JSON und Datenbanksysteme.

Um die Funktionalität von Systemen bzw. Programmen, die mit Schemas spezifizierte Formate verwenden, zu testen, werden entsprechende Datensätze in der Praxis meist händisch erstellt, was langwierig und teuer ist.

Es ist somit eine Aufgabe der vorgestellten Erfindung ein schnelles und verlässliches Prüfen eines Computerprogramms zu ermöglichen.

Es wird somit gemäß einem ersten Aspekt der vorgestellten Erfindung ein computerimplementiertes Verfahren zur Prüfung eines Computerprogramms vorgestellt.

Das vorgestellte Verfahren umfasst das Erzeugen einer Grammatik auf Grundlage von vorgegebenen syntaktischen und semantischen Formatbeschreibungen, das Erzeugen von Bedingungen, die potentiell teilsprachenübergreifende semantische Eigenschaften abbilden, das Erzeugen von Dokumenten unter Verwendung der Grammatik und Lösen der Bedingungen, die Prüfung eines Computerprogramms mittels der erzeugten Dokumente und das Ausgeben einer Meldung, die ein Ergebnis der Prüfung umfasst.

Unter einer Bedingung ist im Kontext der vorgestellten Erfindung eine Aussage zu verstehen, die mögliche Dokumente, die aus der Grammatik abgeleitet werden, einschränkt.

Das vorgestellte Verfahren basiert darauf, dass eine Grammatik und zusätzliche, darauf aufbauende semantische Bedingungen auf Grundlage von vorgegebenen syntaktischen und semantischen Formatbeschreibungen erzeugt werden. Einfache semantische Bedingungen wie gewisse Wertebereiche werden direkt in der Grammatik reflektiert. Komplexere Bedingungen werden in einer Beschreibungssprache ausgedrückt, welche die in der Grammatik verwendeten Symbole verwendet und deren mögliche Werte, sowohl individuell aus auch im Verhältnis zu anderen Symbolen, verfeinert. Durch diese Kombination von syntaktischen und semantischen Formatbeschreibungen wird bspw. erreicht, dass eine Abdeckung von Eingabeeigenschaften optimiert wird sowie Spezifikationselemente gezielt ausgereizt bzw. verletzt werden können. Dies bedeutet, dass die Funktionalität des zu prüfenden Computerprogramms vollumfänglich und systematisch geprüft werden kann.

Das Verfahren unterstützt die Umsetzung komplexer Logik in den semantischen Bedingungen. So lassen sich Bedingungen negieren und Implikationen der Art "wenn Feld a existiert, muss auch Feld b existieren" und Eindeutigkeits-Abhängigkeiten ausdrücken.

Das vorgestellte Verfahren erzeugt mittels der erzeugten Grammatik gültige Dokumente, d.h. Dokumente, die generell von dem zu prüfenden Computerprogramm akzeptiert werden und ändert systematisch einen Inhalt verschiedener Dokumente gemäß der vorgegebenen Formatbeschreibungen und Bedingungen.

*Die Eigenschaften eines spezifischen, XML-basierten Formats werden über XML-Schemas festgelegt. Ein XML-Schema ist eine formale Beschreibung einer Klasse von XML-Dokumenten. In der Praxis werden verschiedene, konkrete Formate zur Beschreibung von XML-Schemas eingesetzt. Zu den bekanntesten zählen XSD (XML Schema Definition-Sprache) und Schematron.*

*XML-Schemas definieren die syntaktische Struktur und die verwenden Datentypen eines Formats, aber auch semantische Eigenschaften wie Wertebereiche oder Beziehungen zwischen Datenelementen. XML-Schemas unterstützen auch die Dekomposition von Sprachen in Teilsprachen durch verschiedene Mechanismen zur Wiederverwendung definierter Strukturen.*

Es kann vorgesehen sein, dass die Bedingungen ISLa-Constraints sind.

Sogenannte ISLa-Constraints können von einem ISLa Generator verarbeitet und beim Erzeugen der Dokumente automatisch berücksichtigt werden. Dabei bedingen ISLa-Constraints eine hohe Flexibilität beim Erzeugen der Dokumente.

Es kann weiterhin vorgesehen sein, dass das Erzeugen der Dokumente für eine vorgegebene Anzahl an Zyklen wiederholt wird, wobei die verwendeten Bedingungen sowie die Ausgestaltung der Grammatik in jedem Zyklus variiert werden.

Insbesondere können so einzelne Felder und semantische Eigenschaften geprüft werden sowie das Verhalten des Computerprogramms bei der Eingabe von Extremwerten, Zwischenwerten, oder der Kombination verschiedener Wertebereiche. Durch die Änderung der Bedingungen und die systematische Berücksichtigung möglicher Ableitungen in der Grammatik wird eine größtmögliche Abdeckung sowohl struktureller als auch semantischer Bedingungen erreicht, sodass sämtliche Aspekte der Eingabesprache untersucht werden.

Insbesondere kann weiterhin vorgesehen sein, dass das Prüfen des Computerprogramms durch "Fuzz-testing" erfolgt.

Fuzz-Testing ermöglicht ein systematisches Abdecken der verwendeten der Grammatik, sodass ein Ergebnis der Prüfung des Computerprogramms besonders valide ist.

Es kann weiterhin vorgesehen sein, dass das Prüfen des Computerprogramms durch korrumpierte Versionen von für das Computerprogramm validen Inputdaten erfolgt.

Durch systematisch korrumpierte Daten kann eine Reaktion des zu prüfenden Computerprogramms auf spezifische Korrumpierungen geprüft werden, sodass ein Ergebnis der Prüfung des Computerprogramms besonders valide ist.

Es kann weiterhin vorgesehen sein, dass die vorgegebenen syntaktischen und semantischen Formatbeschreibungen Teilschemata und Schema-Bedingungen umfassen.

Teilschemata und Schema-Bedingungen ermöglichen eine Prüfung des zu prüfenden Computerprogramms über einen besonders breiten Arbeitsbereich hinweg, sodass auch dadurch ein Ergebnis der Prüfung des Computerprogramms besonders valide ist.

Es kann weiterhin vorgesehen sein, dass die Meldung eine Fehlermeldung umfasst, für den Fall, dass das Computerprogramm die erzeugten Dokumente nicht vollständig verarbeitet.

Eine Fehlermeldung kann bspw. auf einer Anzeigeeinheit ausgegeben und/oder in einem Fehlerspeicher hinterlegt werden.

Es kann weiterhin vorgesehen sein, dass die Meldung eine Validierungsmeldung umfasst, für den Fall, dass das Computerprogramm die erzeugten Dokumente vollständig verarbeitet.

Eine Validierungsmeldung kann bspw. auf einer Anzeigeeinheit ausgegeben und/oder in einem Speicher hinterlegt werden.

Gemäß einem zweiten Aspekt betrifft die vorgestellte Erfindung ein Programmprodukt, wobei das Programmprodukt Programmcodemittel umfasst, die eine Recheneinheit dazu konfigurieren, eine mögliche Ausgestaltung des vorgestellten Verfahrens auszuführen, wenn das Programmprodukt auf der Recheneinheit ausgeführt wird.

Gemäß einem dritten Aspekt betrifft die vorgestellte Erfindung eine Recheneinheit, wobei die Recheneinheit dazu konfiguriert ist, eine mögliche Ausgestaltung des vorgestellten Verfahrens auszuführen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine mögliche Ausgestaltung des vorgestellten Verfahrens,
- Fig. 2: eine mögliche Ausgestaltung des vorgestellten Programmprodukts,
- Fig. 3: eine mögliche Ausgestaltung der vorgestellten Recheneinheit.

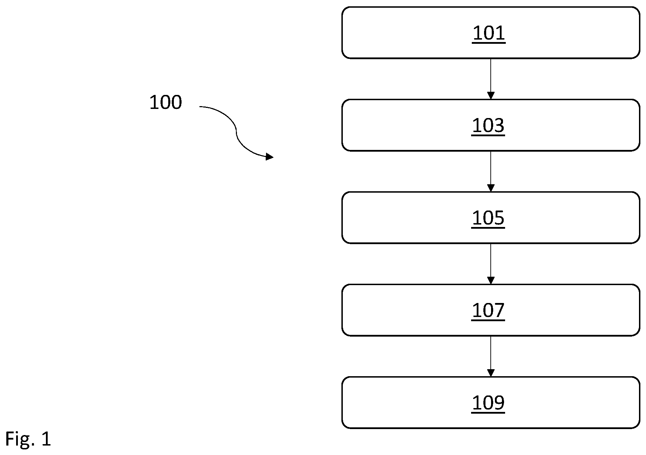

In Fig. 1 ist ein computerimplementiertes Verfahren 100 zur Prüfung eines Computerprogramms dargestellt.

Das Verfahren 100 umfasst einen ersten Erzeugungsschritt 101, bei dem eine Grammatik auf Grundlage von vorgegebenen syntaktischen und semantischen Formatbeschreibungen erzeugt wird.

Weiterhin umfasst das Verfahren 100 einen zweiten Erzeugungsschritt 103, bei dem Bedingungen erzeugt werden, die potentiell teilsprachenübergreifende semantische Eigenschaften abbilden.

Weiterhin umfasst das Verfahren 100 einen dritten Erzeugungsschritt 105, bei dem eine Anzahl Dokumente unter Verwendung der Grammatik und durch Lösen der Bedingungen erzeugt wird.

Weiterhin umfasst das Verfahren 100 einen Prüfschritt 107, bei dem ein Computerprogramm mittels der erzeugten Dokumente geprüft wird.

Weiterhin umfasst das Verfahren 100 einen Ausgabeschritt 109, bei dem eine Meldung ausgegeben wird, die ein Ergebnis des Prüfschritts 107 umfasst.

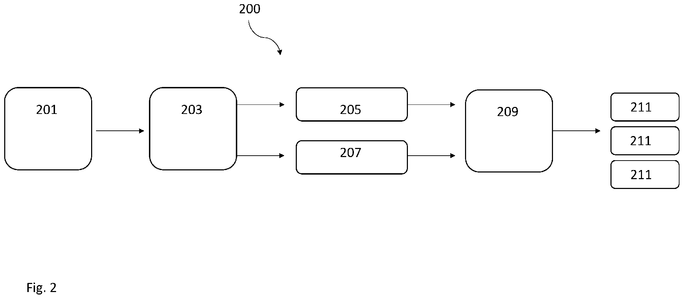

In Fig. 2 ist ein Programmprodukt 200 schematisch dargestellt.

Ausgehend von Schemadateien mit syntaktischen und semantischen Bedingungen 201 erzeugt ein Übersetzungsmodul 203 eine Grammatik 205, die syntaktische Strukturen der Eingabeschemas erfasst.

Zusätzlich generiert das Übersetzungsmodul 203 eine Menge sogenannter ISLa-Constraints 207, die potenziell Teilsprachen- übergreifende semantische Eigenschaften abbilden.

Die Grammatik 205 und die ISLa-Constraints 207 werden anschließend durch einen Generator 209 beliebig oft zu gültigen Dokumenten 211 umgewandelt bzw. instanziiert.

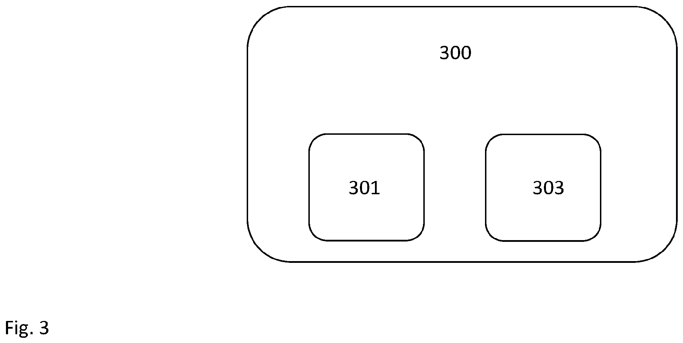

In Fig. 3 ist eine Recheneinheit 300 dargestellt. Die Recheneinheit umfasst einen Speicher 301 und einen Prozessor 303. In dem Speicher 301 sind Programmcodemittel hinterlegt, die den Prozessor dazu konfigurieren, das Verfahren 100 gemäß Fig. 1 durchzuführen.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 100: Verfahren
- 101: erster Erzeugungsschritt
- 103: zweiter Erzeugungsschritt
- 105: dritter Erzeugungsschritt
- 107: Prüfschritt
- 109: Ausgabeschritt
- 200: Programmprodukt
- 201: Schemadatei
- 203: Übersetzungsmodul
- 205: Grammatik
- 207: ISLa-Constraint
- 209: Generator
- 211: Dokument
- 300: Recheneinheit
- 301: Speicher
- 303: Prozessor

## Patentansprüche

1. Computerimplementiertes Verfahren (100) zur Prüfung eines Computerprogramms, wobei das Verfahren (100) umfasst:
- Erzeugen (101) einer Grammatik (205) auf Grundlage von vorgegebenen syntaktischen und semantischen Formatbeschreibungen,
- Erzeugen (103) von Bedingungen (207), die potentiell teilsprachenübergreifende semantische Eigenschaften abbilden,
- Erzeugen (105) von Dokumenten (211) unter Verwendung der Grammatik (205) und Lösen der Bedingungen (207),
- Prüfung (107) eines Computerprogramms mittels der erzeugten Dokumente (211),
- Ausgeben (109) einer Meldung, die ein Ergebnis der Prüfung umfasst.

2. Verfahren (100) nach Anspruch 1,
**dadurch gekennzeichnet,**
**dass** die Bedingungen (207) ISLa-Constraints sind.

3. Verfahren (100) nach Anspruch 1 oder 2,
**dadurch gekennzeichnet,**
**dass** das Erzeugen (105) der Dokumente (211) für eine vorgegebene Anzahl an Zyklen wiederholt wird, wobei die verwendeten Bedingungen (207) sowie die Ausgestaltung der Grammatik in jedem Zyklus variiert werden.

4. Verfahren (100) nach einem der voranstehenden Ansprüche,
**dadurch gekennzeichnet,**
**dass** das Prüfen des Computerprogramms durch "Fuzz-testing" erfolgt.

5. Verfahren (100) nach einem der voranstehenden Ansprüche,
**dadurch gekennzeichnet,**
**dass** das Prüfen des Computerprogramms durch korrumpierte Versionen von für das Computerprogramm validen Inputdaten erfolgt.

6. Verfahren (100) nach einem der voranstehenden Ansprüche,
**dadurch gekennzeichnet,**
**dass** die vorgegebenen syntaktischen und semantischen Formatbeschreibungen Teilschemata und Schema-Bedingungen umfassen.

7. Verfahren (100) nach einem der voranstehenden Ansprüche,
**dadurch gekennzeichnet,**
**dass** die Formatbeschreibungen XML-Schemata umfassen.

8. Verfahren (100) nach einem der voranstehenden Ansprüche,
**dadurch gekennzeichnet,**
**dass** die Meldung eine Fehlermeldung umfasst, für den Fall, dass das Computerprogramm die erzeugten Dokumente (211) nicht vollständig verarbeitet.

9. Verfahren (100) nach einem der voranstehenden Ansprüche,
**dadurch gekennzeichnet,**
**dass** die Meldung eine Validierungsmeldung umfasst, für den Fall, dass das Computerprogramm die erzeugten Dokumente (211) vollständig verarbeitet.

10. Programmprodukt (200),
wobei das Programmprodukt (200) Programmcodemittel umfasst, die eine Recheneinheit (300) dazu konfigurieren, ein Verfahren nach einem der Ansprüche 1 bis 9 auszuführen, wenn das Programmprodukt (200) auf der Recheneinheit (300) ausgeführt wird.

11. Programmprodukt (200) nach Anspruch 10,
**dadurch gekennzeichnet,**
**dass** das Programmprodukt (200) umfasst:
- ein Übersetzungsmodul (203), das dazu konfiguriert ist, vorgegebene syntaktischen und semantische Formatbeschreibungen in eine Grammatik (205) und eine Anzahl Bedingungen (207) zu übersetzen,
- einen bedingungsbasierten Generator (209), der dazu konfiguriert ist, die Dokumente (211) durch Fuzzing der Schemata und/oder der Bedingungen (207) zu erzeugen.

12. Recheneinheit (300),
wobei die Recheneinheit (300) dazu konfiguriert ist, ein Verfahren (100) nach einem der Ansprüche 1 bis 9 auszuführen.
